(19) Europäisches Patentamt
European Patent Office
Office européen des brevets

(11) Publication number: 0 063 537
A2

(12) EUROPEAN PATENT APPLICATION

(21) Application number: 82730042.7

(22) Date of filing: 31.03.82

(51) Int. Cl.³: C 10 G 11/18
B 01 D 53/36

(30) Priority: 20.04.81 US 255965

(43) Date of publication of application:
27.10.82 Bulletin 82/43

(84) Designated Contracting States:
AT BE CH DE FR GB IT LI LU NL SE

(71) Applicant: ASHLAND OIL, INC.
P.O. Box 391
Ashland, KY 41101(US)

(72) Inventor: Kovach, Stephen M.
3430 Yuma Drive
Ashland Kentucky 41101(US)

(74) Representative: Miehe, Manfred, Dipl.-Chem.
Falkenried 4
D-1000 Berlin 33(DE)

(54) **Method for the disposal of sulfur oxides from a catalytic cracking operation.**

(57) A process and material is disclosed for disposing of $SO_x$ laden regeneration flue gas by contacting the flue gas under selected reaction conversion conditions in a reaction zone with a high metal containing particulate material to remove sulfur oxides. Reaction conditions are such that the sulfur oxides are removed by selective adsorption or reaction with the metals to yield metal sulfites - sulfates. The metal sulfite-sulfate containing material is regenerated-rejuvenated in a reductive atmosphere or oxidative-steam atmosphere and the regenerated solid particulate material is recycled back to the $SO_x$ removal zone. The $SO_x$ in a reductive atmosphere is recovered as hydrogen sulfide and in the oxidative-steam atmosphere as sulfur oxides. The particulate material of the invention can be active or deactivated catalyst from FCC and or RCC operations containing sufficient metals, such as Ni-V-Fe, to react with the sulfur oxides or a low activity high metals containing sorbent material such as obtained from a metal recovery system in front of a reduced crude conversion unit.



Croydon Printing Company Ltd.

# A METHOD FOR THE DISPOSAL OF SULFUR OXIDES FROM A CATALYTIC CRACKING OPERATION

## Background of The Invention

The catalytic cracking of a high sulfur containing high boiling portion of crude oil deposits metals, hydrocarbonaceous material and sulfur containing compounds on the cracking catalyst. Some of the sulfur is removed with the hydrocarbon conversion product of the catalytic cracking operation which are separated in downstream processing equipment such as the product fractionator and a downstream gaseous product recovery plant. Gaseous sulfur products separated in the gaseous product recovery plant are then separately recovered as by a Claus unit or other means known in the industry.

Sulfur compounds retained with the catalyst are passed to the catalyst regeneration operation wherein the sulfur is converted to sulfur oxides during combustion of hydrocarbonaceous deposits with oxygen containing regeneration gas and is removed with the regeneration flue gases.

The present invention is concerned with a method of recovering and disposing of sulfur oxides from regeneration flue gases.

## Summary of The Invention

The present invention is concerned with a method for disposing of sulfur oxides in regeneration flue gas by a selective adsorption of the sulfur oxides on a high metals containing

conversion catalyst or solid sorbent material such as obtained during the processing of high boiling residual oils of relatively high contaminating metals concentrations. More particularly the present invention is concerned with the recovery of sulfur oxides from regeneration flue gases by selective adsorption thereof with a high metals containing spent or deactivated cracking catalyst such as a fluid catalyst of catalytic cracking in a zone generally external to the normal fluid catalytic cracking - catalyst regeneration operation.

Processing high sulfur containing oil feeds such as reduced crude containing oil feed material over a fluid cracking catalyst will yield a spent or deactivated catalyst containing hydrocarbonaceous deposits, metal contaminants and a high concentration of sulfur. The contaminated catalyst thus obtained is thereafter regenerated by burning hydrocarbonaceous deposits with oxygen containing gas in a catalyst regeneration zone to yield a product flue gas stream, depending on oxygen concentration employed and temperature, comprising CO, $CO_2$ and sulfur oxides and some free oxygen. The CO to $CO_2$ ratio may be varied considerably by the temperature employed which will or will not promote CO combustion in response to the concentration of oxygen in the regeneration gas stream. This, in turn, can effect the completeness of oxidation of the sulfur to sulfur oxides thereafter removed from the regeneration operation by the flue gas.

In a catalyst regeneration operation, the flue gas passes through a plurality of sequential and parallel cyclone separation systems to effect separation and recovery of entrained catalyst particles from regeneration flue gases. In some cases the flue gases may be subjected to a further separation treatment such as a Cottrell precipitator, an electostatic precipitator or other separator means to separate and recover trace amounts of catalyst fines not removed by upstream cyclone separator equipment. Following the removal of catalyst fines from the flue gas, a CO rich flue gas is generally passed to a CO boiler wherein the CO is combusted to form $CO_2$ and heat which heat is recovered by generating process steam. The $CO_2$ rich flue gas may then be passed to power recovery equipment such as the turbine generator section of a power recovery unit. On the other hand, a regeneration flue gas rich in $CO_2$ may bypass a CO boiler for passage directly to power recovery equipment either before or after direct or indirect partial cooling of the $CO_2$ rich flue gas.

In accordance with a particular aspect of this invention a cooled flue gas recovered from power recovery prime mover equipment is thereafter passed in contact with a metals containing solid sorbent material comprising metal contaminants or a deactivated cracking catalyst such as a fluid cracking catalyst at a temperature within the range of 300°F to about 1000°F for adsorption and/or reaction of the sulfur oxides

remaining in the flue gases with deposited metals oxides in the catalyst to produce a metal sulfite - sulfate compound on the catalyst surface. The metals deactivated cracking catalyst may be a high metals containing spent or deactivated cracking catalyst produced, for example, in a fluid catalyst cracking operaton by contacting a high metals containing reduced crude containing feed material with fresh and/or equilibrium catalyst to provide a spent or deactivated catalyst containing greater than 15,000 ppm metals equivalent and more usually from 30,000 to 70,000 ppm metals equivalent calculated by the relationship: 4 Ni + V + Fe.

The spent or deactivated catalyst thus contacted with sulfur oxide containing flue gas to form metal sulfite - sulfate compounds may be subjected to one or more further treatments as desired and discussed below. That is the deactivated catalyst comprising sulfite and sulfate compounds of nickel, vanadium and iron may be discarded or regenerated. On the other hand, the catalyst may be washed with water at a suitable temperature to decompose the sulfate metal compounds. Regeneration of the metal sulfite - sulfate containing deactivated catalyst may be accomplished by one of high temperature treatment above 900°F, hydrogen reduction and recycle of the catalyst to the riser hydrocarbon conversion zone to obtain a reduction of sulfur oxides to hydrogen sulfide. Hydrogen sulfide thus produced is then easily separated from hydrocarbon conversion products in downstream processing equipment such as the refinery

gas plant for further recovery as by a Claus unit or other known recovery processes.

Discussion of Specific Embodiements

The type of solid particulate materials to be utilized to advantage in accordance with this invention is either a high metals containing - spent or deactivated catalyst obtained from a FCC or RCC operation, or a high metal containing solid sorbent material used in a metals removal non-catalytic process or contact system to convert high metals - high Conradson carbon feeds to lower metals - Conradson carbon containing feed materials more suitable for use in high activity catalytic cracking operations.

The catalyst obtained from a RCC or FCC process can have catalytic activity varying considerably depending on the severity of the operations, below a MAT conversion of 50%, little or no catalytic activity below a MAT conversion of 20% or a high catalytic activity in the range of 50-80 vol% as determined by (MAT) the microactivity test. The metals content of the catalysts used to accomplish the concepts of this invention will be above 1 wt%, preferably in the range of 2-4 wt%. The primary metals deposited on the solid particulate material and/or catalyst will be Ni-V-Fe in many different ratios depending on crude source, the most likely ratio will be Ni/V/Fe in the ratios 2/1/2 to 1/13/1.

It is intended that no undue restrictions are to be imposed on these ratios by reasons thereof. The exact ratio of

Ni-V-Fe deposited on the catalyst will be a function of their concentration in the feed and the ease of crackability of the metallo-porphyrins and/or metallo-asphaltenes. An example of the ratios of Ni-V-Fe in some common crudes are shown in Table 1.

TABLE 1

METALS CONTENT OF 650°F+ FRACTION

| OIL OR CRUDE | METALS - WT. PPM(1) Ni | V | Fe | Metal Equiv(2) | Ni/V/Fe |
|---|---|---|---|---|---|
| VACUUM GAS OIL | 0.2 | 0.1 | 2.6 | 3.5 | 2/1/26 |
| MEXICAN ISTHMUS | 3 | 34 | 2 | 48 | 1/11/0.7 |
| MEXICAN-KIRKUK | 35 | 99 | 17 | 256 | 1/2.8/0.5 |
| MURBAN | 3 | 2 | 12 | 26 | 1/0.6/4 |
| ARABIAN LIGHT | 6 | 25 | 3 | 52 | 1/4/0.5 |
| ARABIAN MED. | 20 | 63 | 3 | 146 | 1/3/0.1 |
| EKOFISH | 1 | 3 | 2 | 9 | 1/3/2 |
| FOSTERTON | 49 | 119 | 3 | 318 | 1/2.4/0.1 |
| IRANIAN LIGHT | 22 | 60 | 3 | 151 | 1/3/0.1 |
| WYOMING SOUR | 1 | 70 | 2 | 76 | 1/70/2 |

(1) Copper levels below 0.6 ppm

(2) Metal Equivalents = 4 Ni + V + Fe

A high nickel and iron ratio is exhibited in the Vacuum Gas Oil and Murban crudes. Whereas an extremely high vanadium ratio is exhibited by the Mexican Isthmus and Wyoming Sour Crudes. In addition, certain heavy residual fractions, such as

Venezuelan Orinoco heavy oil contains extremely high concentrations of vanadium (500-1,000 ppm) with very little nickel or iron.

A partially deactivated or catalytically spent catalyst can be recovered or withdrawn from a regeneration operation such as the regenerator section of an FCC or more particularly a RCC unit in a highly regenerated or oxidized state to ensure that the residual coke on the recycle catalyst is low (below 0.05%, preferably as low as 0.01%) to ensure that deposited metals of Ni, V, Fe are in an oxidized state.

The feedstocks for which the invention is particularly useful will have a sulfur content of at least 0.5 wt%, preferably greater than 1 wt% and most preferably from 1 wt% up to 8 wt%. This invention is useful for recovering and disposing of sulfur oxides from regeneration flue gases generated in FCC units processing vacuum gas oils, heavy vacuum gas oils and gas oils containing up to 25 vol% reduced crudes. This invention is particularly useful for recovering and disposing of sulfur oxides from regeneration flue gases generated in reduced crude or topped crude processing units. This process is not limited to petroleum based feedstock but can be utilized when processing liquids from coal liquefaction, oil shale retorting, tar sand beneficiation, and the like.

In processing heavy oils comprising reduced crudes, especially topped crude and residual oils, the amount of carbonaceous material deposited on a catalyst and/or solid

sorbent material is greater than that encountered in vacuum gas oil (VGO) operation and secondly, this deposited carbonaceous material has a substantial amount of sulfur present within its structure. The regeneration or rejuvenation operation used to remove deposited carbonaceous material in the presence of air or an oxygen enriched gas yields a flue gas comprising nitrogen, carbon monoxide, carbon dioxide and sulfur oxides. The amount of sulfur oxides in the flue gas can range from 1,000 ppm to as high as 10,000 ppm or higher. In accordance with required government EPA standards this concentration of CO and sulfur oxides ($SO_2$ + $SO_3$) must be removed from the flue gas before venting it to the atmosphere. In accordance with this invention these noxious sulfur oxides laden flue gases are passed in contact with a solid particulate material such as a metals loaded spent or deactivated FCC or RCC conversion catalyst or a metals removal inert solid sorbent material to yield a flue gas stream substantially completely free of sulfur oxides. However, in order to practice this invention with a high degree of efficiency, the CO content of the flue gas is used to advantage and simultaneously reduced to low values, e.g. below 1,000 ppm, preferably below 500 ppm and more usually below about 250 ppm. One reason that (CO) carbon monoxide concentration of the flue gas must be reduced to preferably very low levels is because of its reductive nature, that is CO will react with a metal oxide product of regeneration to reduce it to a lower valence state or elemental metal while the CO is

oxidized to $CO_2$. The following are examples of this reduction process.

$$NiO + CO \underset{k_2}{\overset{k_1}{\rightleftharpoons}} Ni + CO_2$$

$$V_2O_5 + CO \underset{k_4}{\overset{k_3}{\rightleftharpoons}} V_2O_4 + CO_2$$

A second important aspect of the combination operation of this invention is in effecting a reduction in the temperature of the flue gas exiting at a temperature in the range of 1200°F up to 1600°F so that the formation of a metal sulfite and/or sulfate is favored. That is high temperatures of about 1400°F favor the decomposition of metal sulfites - sulfates and lower temperatures in the range of 300-1000°F favor the formation of the metal sulfite - sulfate particularly desired. Thus to ensure that an oxidation atmosphere rather than a reducing atmosphere is present and a proper temperature range is provided for ensuring the reaction desired, the existing hot flue gas stream from a solid regenerator-rejuvenator operation is processed initially in a CO boiler and then in a turbine expander power recovery prime mover unit. This combination of processing units not only prepares the flue gas for removal of sulfur oxides but provides a most attractive and economic package for the generation and recovery of electrical power and/or steam in conjunction with disposal of noxious sulfur oxide contaminants.

In a particular embodiement, the existing flue gas of a CO boiler operation is passed through a catalyst or solid

particulate fines separator system and then through a first stage of a turbine expander power recovery unit to take advantage of the temperature-pressure energy of the CO rich flue gas combusted in a CO boiler which converts CO to $CO_2$. In the turbine expander and a downstream heat exchanger (steam production) the CO free flue gas temperature is reduced to within a desired range of 300-1000°F. The thus treated flue gas is then sent to a sulfur oxide ($SO_x$) removal unit, wherein a catalyst and/or a solid sorbent particulate comprising metal oxides of nickel, vanadium and iron is contacted at temperatures promoting the removal of the ($SO_x$) sulfur oxides and a low CO-$SO_x$ content flue gas is produced. The flue gas thus treated and substantially free of CO and sulfur oxides ($SO_x$) may then be vented to the atmosphere. The solid particulate comprising one or both of catalyst particles or inert solid sorbent material and formed metal sulfur compounds is recovered and further processed as herein provided.

A type of contact unit where a $SO_x$ laden flue gas can contact the solid particulate can be of the riser dispersed solids phase type of operation or a homogeneous dense fluid bed type unit may be employed. In the riser dispersed solid phase type operation, the flue gas contacts the metal laden solids at a temperature in the range of (300-1000°F) and introduced flue gas and solids pass upwardly through the riser as a suspension. Following traverse of the riser as a suspension, the suspension

is separated into a flue gas phase free of sulfur oxides and a solids phase comprising metal sulfur compounds. The separated solids are recovered in a bottom portion of a disengagement chamber while the flue gases pass through cyclones to separate entrained solids before being vented to the atmosphere. The separated solids laden with metal sulfites, comprising catalyst and/or solid inert sorbent, is transferred to a solids rejuvenation zone separate and distinct from the regenerator zone where carbonaceous material is burned. In this solids rejuvenation zone the formed metal sulfites and/or metal sulfates are chemically or thermally decomposed to yield a metal or a metal oxide on the solid particulate with the chemically or thermally decomposed sulfur components being removed from the regeneration zone for recovery as herein provided.

Methods for rejuvenating the solid particulate comprising catalyst and/or solid sorbent material are varied. One method contemplated to be pursued is known as the reductive method. In the reductive method, solid particulate loaded with metalsulfite-sulfate is contacted in a dense fluid bed phase with hydrogen to reduce the metal component of the solids and form a mixture of metal-metal oxide and a gas containing a mixture of hydrogen and/or hydrogen sulfide which is separated and recovered by one or more methods known in the art. The rejuvenated solids may be discarded or recycled to the sulfur oxide ($SO_x$) removal unit for further contact with ($SO_x$) sulfur oxide containing flue gas.

In yet another particular embodiment a further reductive method involves the use of a high metals containing high activity catalyst. After contacting the high activity catalyst with $SO_x$ laden flue gas and separation therefrom in a disengagement chamber or zone, the metal sulfite-sulfate containing catalyst is transferred to the regenerated catalyst standpipe of a catalytic conversion catalyst regeneration combination operation or to a bottom portion of a riser conversion zone of a RCC unit. As the metal sulfite-sulfate catalyst contacts fresh feed and travels up the riser the metal sulfate-sulfites are decomposed to particularly yield metal sulfide and hydrogen sulfide. The hydrogen sulfide is separated with the gaseous hydrocarbon products of conversion and can be recovered as sulfur in a downstream Claus unit. Another contemplated method of utilizing the reductive method is the transfer of the metal sulfite-sulfate laden catalyst to a hydrocarbon feed metal recovery unit utilizing low activity catalyst and/or solid sorbent particulate material in front of a reduced crude cracking (RCC) unit. The metal sulfite-sulfate components of the catalyst are reduced to form hydrogen sulfide recovered with gasiform hydrocarbon product material.

Another contemplated method of rejuvenating the metal sulfite-sulfate containing catalyst formed as herein before described is in an oxidative-thermal atmosphere. In this embodiement, the catalyst temperature is adjusted to take advantage of thermal decomposition of metal sulfites-sulfates

on the catalyst in the presence of steam. This desired thermal decomposition is accomplished by utilizing high temperature steam such as that generated in the process either alone or in combination with internal heat exchange. The thermal decomposition of the metal sulfites-sulfates is accomplished at a temperature of at least 900°F or higher.

In yet another particular embodiement, a further reductive method involves the use of a high metals containing catalyst of either high activity or low activity. After contacting the catalyst, of either high or low activity, with $SO_x$ laden flue gas and separation therefrom in a disengagement chamber or zone, a portion of the metal sulfite-sulfate containing catalyst is transferred to the regenerated catalyst standpipe of a catalytic conversion catalyst regeneration combination operation or to a bottom portion of a riser conversion zone of a RCC unit or to a hydrocarbon feed metal recovery unit in front of or upstream of a reduced crude cracking (RCC) unit. The metal sulfite-sulfate components of the catalyst are reduced to form hydrogen sulfide recovered with gasiform hydrocarbon product material. The remainder of the metal sulfite-sulfate containing catalyst is transferred to the catalyst regeneration-rejuvenation zone employing the oxidative-thermal technique as herein before described.

A further method comtemplated is the utilization of a metal loaded and/or a catalytically spent catalyst mass on a once through basis. That is, due to the formation of water

soluble metal sulfites-sulfates as herein provided these metals can be recovered by water washing in a separate zone provided for the removal thereof. On a once through basis this is practiced for particularly low sulfur oxide ($SO_x$) loaded flue gas. The following calculations are provided to identify a once through operation basis:

200 B/D feed = 66,000 lb. of feed

Assuming the flue gas contains 5,000 ppm ($SO_x$) sulfur oxides ($SO_2$-$SO_3$)

Spent catalyst = 2 wt% metal will hold 2 lbs. $SO_x$ (theoretical)

50 lb. catalyst = 1 lb. $SO_x$

Processing 200 B/D feed at 8 C/O = 528,000 lb. catalyst circulated which yields 2500 lb. $SO_x$

This requires 125,000 lb. catalyst at 2 % metal level to contain 2500 lb. $SO_x$ (100% reaction)

Thus based on 200 bbl/day requiring 125,000 lbs. catalyst to hold 2500 lb. $SO_x$, a 20,000 bbl/day unit requires 12,500,000 lbs. catalyst to hold 250,000 lbs. $SO_x$

A 20,000 bbl/day unit with a catalyst withdrawal rate of 4 lb/bbl. yields an equivalent of 80,000 lb/spent catalyst, which is only sufficient to absorb about 8% of the total $SO_x$ made.

This rate of catalyst withdrawal can handle about 400 ppm $SO_x$ in flue gas on a once through basis.

The calculation and assumption made above clearly shows that a circulating solids arrangement employing the combination

of absorption-reaction followed by solids rejuvenation is a much favored route to follow.

It will be recognized by those skilled in the art that the sequence of reaction followed by solids rejuvenation as by reduction, oxidation and steaming, as discussed above can be utilized similarly in homogeneous dense fluidized solids phase units or in downwardly flowing dense solid phase or moving bed units.

An example of a high metals containing spent catalyst for $SO_x$ removal by the invention is that obtained by processing reduced crude over a fluidizable FCC catalyst. A Mexican Kirkuk reduced crude fraction (see crude source in Table 1) was processed over a high activity commercially available FCC catalyst. The process conditions employed were as follows:

| | |
|---|---|
| Feed Rate - | 200 bbl/day |
| Regenerated Catalyst Temperature - | 1375°F |
| Riser Exit Temperature - | 1,000°F |
| Catalyst/Oil - Wt - | 8-9 |
| Makeup Catalyst MAT Activity (1)(3) - | 75-80 |
| Spent Catalyst MAT Activity (2)(3) - | 60-65 |
| Catalyst Addition Rate - | 1.5 lbs/bbl. |

(1) Catalyst activity is determined on a MAT unit of the virgin catalyst which has been steamed for 5 hours - 1450°F - flowing steam.

(2) Catalyst activity of the high metals containing spent catalyst is measured on a MAT unit after burnoff of the coke to

below 0.01 wt% C.

(3) MAT Activity - See ASTM D-32 MAT test D-3907-80 for procedure.

The equilibrium or spent catalyst withdrawn from the unit during this test series had a metal content of 2400 ppm Ni, 9600 ppm V and 5500 ppm Fe which based upon the metal equivalent relationship of the invention yielded 24,700 metal equivalents.

An example employing a high metals containing material to remove sulfur oxides from a regeneration flue gas was demonstrated with a laboratory unit, synthetic flue gas blend and a commercially available high metals containing catalyst from FCC operations. 50g. of catalyst having a metal equivalent value of approximately 15,000 was charged to a 1 inch I.D. quartz reactor heated by a split Leco furnace. A synthetic regeneration flue gas blend was processed through a metal loaded catalyst at a rate of 2.2 cu. ft/hr. The synthetic gas blend contained 79% nitrogen, 20.5% carbon dioxide and 0.5% sulfur dioxide by volume. The reaction of sulfur dioxide with the metals was accomplished at slightly above 300°F and decomposition of the metal sulfites was accomplished at slightly above 900°F with helium as the purge gas. Sulfur dioxide removal from the flue gas and that present in the decomposition gases was measured on a Fisher Model 29 chromatograph.

Utilizing the feed rates, adsorption-reactions times before breakthrough gave the following translation into

commercial values. The high metals containing catalyst operated for 4 minutes on the synthetic blend before sulfur dioxide breakthrough occurred. This translates into a rate of 40,000 cu. ft. per ton of metal loaded catalyst. Employing a U-bend catalytic cracking system that gives a catalyst circulation rate of 70 tons/minute, this will give a flue gas treating rate of 2.8 million cu. ft./minute, well within the limit requirements of any regeneration flue generation process.

Having thus generally described the methods and concepts of this invention and specifically discussed preferred operating embodiements thereof, it is intended that no undue restrictions are to be imposed by reasons thereof.

I Claim:

1. A method for the separation of sulfur oxides from a regeneration flue gas by selective adsorption or reaction with a high metals containing particulate material, said method comprising contacting a high metals and high sulfur containing feed under fluid catalytic cracking conditions in a conversion zone to accumulate hydrocarbonaceous material, metals and sulfur on said fluid cracking catalyst; regenerating said catalyst in the presence of an oxygen containing gas to produce a flue gas containing sulfur oxides, recycling said regenerated catalyst to said fluid catalytic cracking zone for contact with fresh feed; transferring said sulfur oxide laden flue gas to an adsorption-reaction zone for removal of the sulfur oxides by reaction with a high metal containing particulate material to produce a metal sulfite-sulfate laden material; venting the sulfur oxide deficient flue gas to the atmosphere; effecting sulfite-regeneration and/or rejuvenation of the metal sulfate laden particulate material in a reductive atmosphere to yield hydrogen sulfide and/or in an oxidative-steam atmosphere to yield sulfur oxides and a regenerated particulate material; said regenerated particulate material being recycled to the sulfur oxide removal zone for contact with

fresh sulfur oxide laden flue gas and effecting transfer of the hydrogen sulfide with or without some sulfur oxides to a sulfur recovery unit.

2. The method of Claim 1 wherein the high metals containing material is withdrawn from a FCC or RCC unit and has a MAT value of at least 50 and up to at least 75.

3. The method of Claim 1 wherein the high metals containing material is a sorbent withdrawn from a metals recovery unit in front of an RCC unit and has a MAT value below 20.

4. The method of Claim 1 wherein the feedstock to the fluid catalytic cracking zone is a total crude, reduced crude, topped crude a reduced crude to a metals removal-carbonaceious reduction system in front of a reduced crude unit or a liquid synthetic liquid from coal liquefaction, oil shale retorting or tar sand beneficiation product.

5. The method of Claim 1 wherein the reaction of the sulfur oxides in the flue gas with the metal containing particulate material yield a metal sulfite-sulfate containing material.

6. The method of Claim 1 wherein a portion of the metal sulfite-sulfate laden material is regenerated by a reductive process outside the sulfur oxide removal system and the remainder

7. The method of Claim 1 wherein the sulfur oxide laden flue gas is contacted with the high metal containing material in a unit employing a riser transfer zone or homogeneous dense bed or moving bed.

8. A method for disposing of sulfur oxides in catalyst regeneration flue gases which comprises, contacting regeneration flue gases comprising CO and sulfur oxides under conditions to remove CO from the flue gases, contacting flue gases comprising sulfur oxides freed of CO with a metals containing solid particulate under conditions to convert said sulfur oxides into metal sulfites-sulfates and recover sulfur from said metal sulfites-sulfates in a reducing atmosphere as hydrogen sulfides.

9. In a hydrocarbon conversion-catalyst regeneration operation processing sulfur containing hydrocarbon feeds wherein the regeneration flue gas comprises CO, $CO_2$ and sulfur oxides, the method for recovering sulfur oxides in the flue gas which comprises converting CO to $CO_2$, passing a $CO_2$ wet flue gas comprising sulfur oxides in contact with a metals deactivated cracking catalyst circulated in the hydrocarbon

conversion-catalyst regeneration operation to form metal sulfite-sulfate and passing the metal sulfite-sulfate containing catalyst to a zone suitable for removing sulfur as hydrogen sulfide.